# EUROPÄISCHE PATENTSCHRIFT

(11) **EP 0 927 116 B1**
(45) Veröffentlichungstag und Bekanntmachung des Hinweises auf die Patenterteilung: **05.12.2001**
(21) Anmeldenummer: 97942947.9
(22) Anmeldetag: 18.09.1997
(51) Int. Cl.: B60R 21/26

(54) **HYBRIDGASGENERATOR FÜR EINEN AIRBAG MIT EINEM MECHANISCHEN ÖFFNUNGSMECHANISMUS FÜR DIE SPEICHERKAMMER**
HYBRID GAS GENERATOR FOR AN AIR BAG WITH A MECHANICAL OPENING MECHANISM FOR THE STORAGE CHAMBER
GENERATEUR DE GAZ HYBRIDE POUR UN AIRBAG AVEC UN SYSTEME D'OUVERTURE MECANIQUE POUR LA CHAMBRE D'ACCUMULATION

(30) Priorität: 21.09.1996 DE 19638838
(43) Veröffentlichungstag der Anmeldung: 07.07.1999
(73) Patentinhaber: Dynamit Nobel GmbH Explosivstoff- und Systemtechnik, 53840 Troisdorf (DE)
(72) Erfinder: ALBRECHT, Uwe, D-90478 Nürnberg (DE); BRETFELD, Anton, D-90765 Fürth (DE); KRAFT, Josef, D-92348 Berg (DE); ZHANG, Jiang, D-90439 Nürnberg (DE)
(74) Vertreter: Scherzberg, Andreas, Dr.
(86) Internationale Anmeldenummer: EP9705111
(87) Internationale Veröffentlichungsnummer: WO9812078

(56) Entgegenhaltungen:
- WO-A-93/11973
- FR-A- 2 217 186

## Beschreibung

Die Erfindung betrifft einen Hybridgasgenerator für einen Airbag nach dem Oberbegriff des Anspruchs 1.

Aus der EP 0 616 578 B1 ist ein gattungsgemäßer Hybridgasgenerator mit einer Speicherkammer für Gas bekannt, wobei die Speicherkammer mit einer ersten Berstscheibe verschlossen ist. In einer Brennkammer ist eine anzündbare gaserzeugende Feststoffladung angeordnet. Eine die Brennkammer begrenzende, abreißbare Trennwand ist mit einem hohlen Schiebekolben zum Durchbohren der ersten Berstscheibe verbunden. Eine zweite Berstscheibe ist in der Trennwand zwischen der Brennkammer und dem Hohlraum des Schiebekolbens angeordnet. Bei Anzündung der gaserzeugenden Feststoffladung reißt durch den sich aufbauenden Druck die Trennwand mit dem Schiebekolben von der Brennkammer ab, und der Schiebekolben durchstößt mit seiner Spitze die erste Berstscheibe zur Speicherkammer. Daraufhin kann kaltes Gas über Austrittsöffnungen in einen Gassack gelangen. Durch den sich weiter aufbauenden Druck in der Brennkammer zerplatzt die zweite Berstscheibe in der Trennwand, und heißes Gas strömt in die Speicherkammer und erhitzt dort das gespeicherte Gas.

Nachteilig hieran ist die sehr aufwendige Konstruktion, die eine wirtschaftliche Herstellung erschwert.

Der Erfindung liegt die Aufgabe zugrunde, einen Hybridgasgenerator nach dem Oberbegriff des Anspruchs 1 einfacher und damit kostengünstiger zu konstruieren. Der Gasgenerator soll nur aus wenigen zusammenbaubaren Modulen bestehen.

Erfindungsgemäß wird diese Aufgabe dadurch gelöst,
- daß die Feststoffladung in einer separat einbaubaren pyrotechnischen Kartusche angeordnet ist,
- daß die Trennwand die stirnseitige Begrenzung der Kartusche bildet,
- daß an der Umfangswand der Kartusche eine umlaufende Kerbe als Sollbruchstelle für das Abreißen der Trennwand angeordnet ist und
- daß die zweite Berstscheibe eine Abplattung in der Trennwand ist.

Durch diese Maßnahmen ist der Schiebekolben mit der pyrotechnischen Kartusche auf einfache Bauweise zu einem Modul integriert.

In vorteilhafter Weiterbildung überragt die Umfangswand der Kartusche die Trennwand als axial verlängerten Haltebund und der Schiebekolben ist mit seinem zur Trennwand gewandten Ende zwischen der Trennwand und dem Haltebund eingebettet.

Dieses Einbetten kann auf zwei vorteilhafte Arten bewerkstelligt werden. In einer ersten Ausführungsform weist der Schiebekolben an seinem zur Trennwand gewandten Ende eine umlaufende Nut auf, in die der Haltebund eingedrückt oder eingerollt wird. In einer zweiten Ausführungsform ist der Schiebekolben mit der Trennwand durch Bördeln des Haltebundes um das zur Trennwand gewandte Ende des Schiebekolbens verbunden.

Damit der Schiebekolben in seiner ausgefahrenen Stellung nach dem Durchstoßen der ersten Berstscheibe arretiert ist, ist der Schiebekolben an seinem zur Trennwand gewandten Ende konisch ausgebildet mit einem gegenüber dem Durchmesser der Kolbenführung radialen Übermaß.

Weitere Merkmale ergeben sich aus den Figuren, die nachfolgend beschrieben sind. Es zeigt:
- Fig. 1: einen erfindungsgemäßen Hybridgasgenerator für einen Airbag mit den wesentlichen Komponenten im Schnitt vor der Auslösung,
- Fig. 2: den Öffnungsmechanismus von Fig. 1 in vergrößertem Maßstab mit dem Schiebekolben in der Ausgangsstellung,
- Fig. 3: den Schiebekolben in Endstellung mit zerstörter erster Berstscheibe und intakter zweiter Berstscheibe,
- Fig. 4: den Schiebekolben in Endstellung mit zerstörter erster und zweiter Berstscheibe,
- Fig. 5: die Befestigung des Schiebekolbens an der Kartusche über einen Haltebund, der in eine Nut eingedrückt oder eingerollt wird und
- Fig. 6: die Befestigung des Schiebekolbens an der Kartusche durch Bördeln.

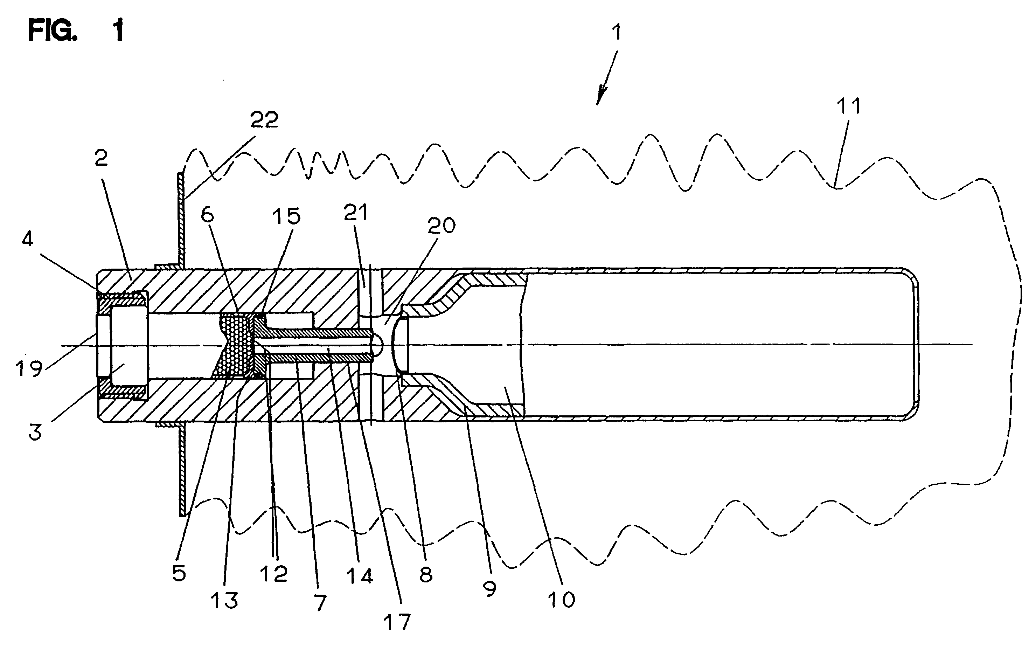

Figur 1 zeigt einen erfindungsgemäßen Hybridgasgenerator für einen Airbag 1 mit seinen wesentlichen Komponenten im Schnitt. In einem zylinderförmigen Gehäuse 2 ist eine Speicherkammer 9 für Gas 10 eingesetzt. Die Speicherkammer 9 ist an ihrer Öffnungsseite mit einer ersten Berstscheibe 8 bzw. einer Öffnungsmembran verschlossen. Gegenüber dieser ersten Berstscheibe 8 ist eine pyrotechnische Kartusche 3 über eine Verschlußmutter 4 eingesetzt. In dieser Kartusche 3 befindet sich außer einer anzündbaren gaserzeugenden Feststoffladung 5 ein nicht gezeigtes Anzündelement. Über einen Stecker, der an die Buchse 19 angeschlossen wird, kann das Anzündelement initiiert und damit die Feststoffladung angezündet werden. Die Kartusche 3 ist vorzugsweise aus Aluminium und z. B. durch Umformvorgänge, wie Fließpressen, Pressen und Rollen kostengünstig hergestellt.

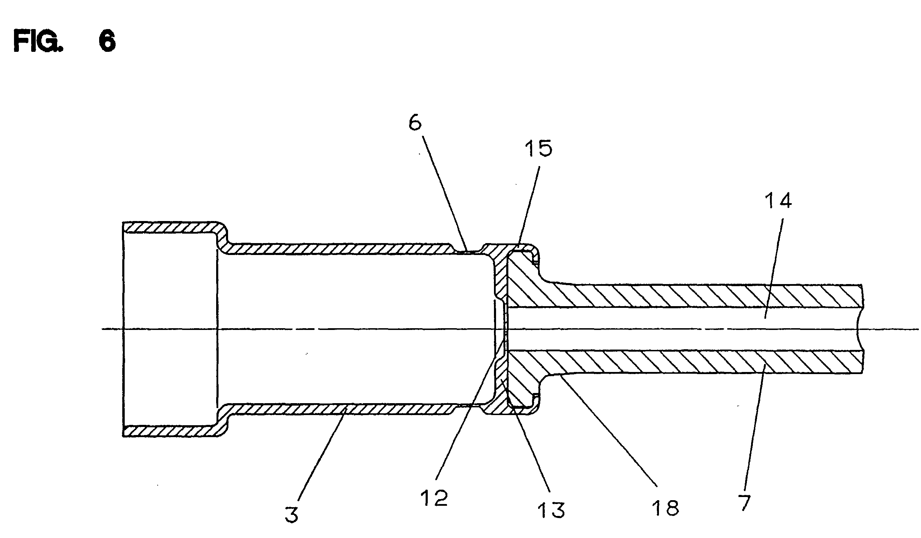

An der Stirnseite der Kartusche ist eine abtrennbare Trennwand 13 angeordnet. An dieser Trennwand 13 ist ein Schiebekolben 7 befestigt, der in einer Kolbenführung 17 geführt ist. Damit die Trennwand 13 und damit der Schiebekolben 7 abtrennbar sind, ist an der Umfangswand der Kartusche 3 eine umlaufende Kerbe 6 als Sollbruchstelle eingebracht. Zur Befestigung des Schiebekolbens 7 an der Kartusche 3 weist die Umfangswand der Kartusche 3 einen zur Trennwand 13 axial verlängerten Haltebund 15 auf. Dieser Haltebund 15 überragt demnach die Trennwand 13. Der Schiebekolben 7 ist mit seinem zur Trennwand 13 gewandten Ende zwischen der Trennwand 13 und dem Haltebund 15 eingebettet. Die Figuren 5 und 6 zeigen zwei alternative Befestigungsmöglichkeiten.

In der Figur 5 weist der Schiebekolben 7 an seinem zur Trennwand gewandten Ende eine umlaufende Nut 16 auf, in die der Haltebund 15 eingedrückt oder eingerollt wird. Die fertige Verbindung zeigt Figur 1.

In Figur 6 ist der Schiebekolben 7 mit der Trennwand 13 durch Bördeln des Haltebundes 15 um das zur Trennwand 13 gewandte Ende des Schiebekolbens 7 verbunden.

In der Trennwand 13 ist durch Abplattung eine zweite Berstscheibe 12 gebildet. An diese zweite Berstscheibe 12 grenzt der Hohlraum 14 des Schiebekolbens 7, d. h. seine Durchgangsbohrung.

Vor der ersten Berstscheibe 8 ist ein Austrittsraum 20 angeordnet, von dem Bohrungen 21 nach außen zu einem Luftsack 11 führen. Der Luftsack 11 ist an einem Befestigungsflansch 22 am Gehäuse 2 festgelegt.

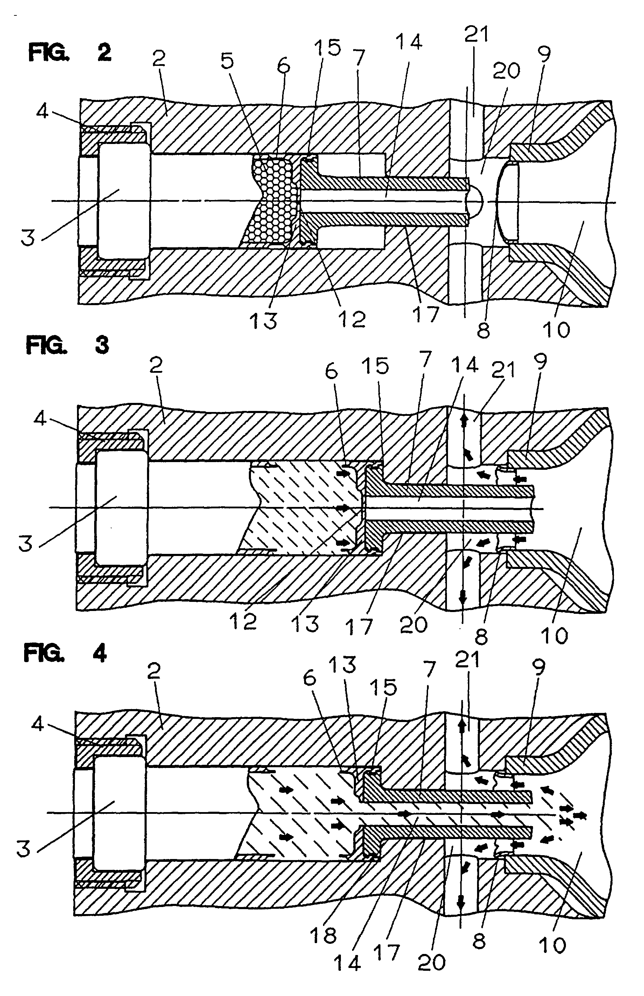

Der Funktionsablauf wird nachfolgend anhand der Figuren 2 bis 4 beschrieben. Figur 2 zeigt den Öffnungsmechanismus von Figur 1 in vergrößertem Maßstab vor der Auslösung.

Der Erfindung liegt der Gedanke zugrunde, daß nach der Initiierung des Hybridgasgenerators zuerst kaltes Speichergas aus den Austrittssöffnungen 21 ausströmen soll, erst dann folgt das heiße Umsetzungsgas bzw. das Gemisch aus dem kalten Speichergas und dem heißen Umsetzungsgas. Die Vorteile eines so gestalteten Ausströmungsvorgangs sind, daß erstens eine starke Erhöhung des Gasdrucks im Speichergasraum infolge des Einströmens des Umsetzungsgases vermieden wird und zweitens thermische Belastungen auf den Luftsack 11 (Durchschmelzen, Anbrennen) durch heiße Gase vermindert werden.

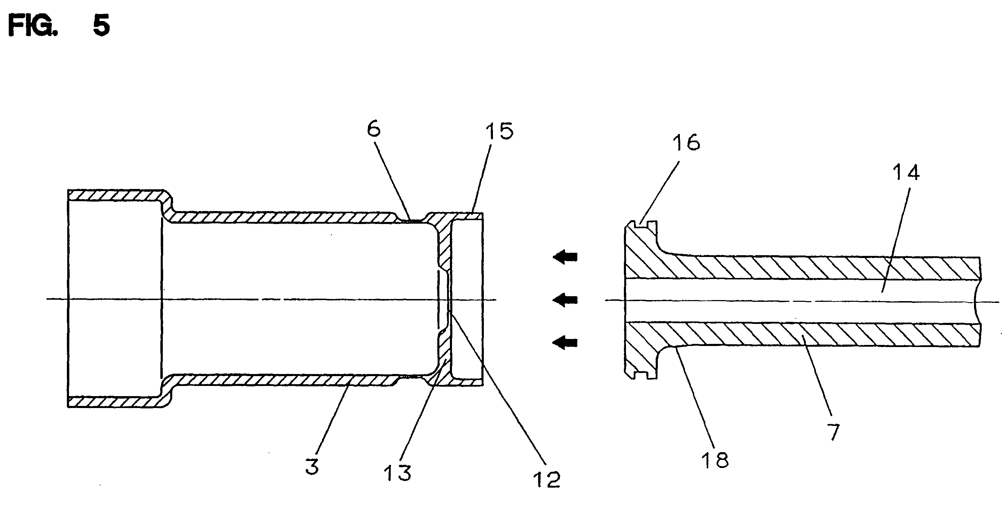

Bei Bedarf kann die pyrotechnische Kartusche 3 elektrisch oder mechanisch angezündet werden. Die Anzünd- und Abbrandcharakteristik wird so eingestellt, daß in der Kartusche 3 ein definierter Gasdruckanstieg erreicht wird. Der steigende Gasdruck (siehe Fig. 3) drückt zunächst mit der axialen Gaskraft auf den Hülsenboden, d. h. die Trennwand 13, und reißt die umlaufende Kerbe 6 auf dem Mantel ab, trennt den Boden von der restlichen Hülse und schiebt und beschleunigt diesen mit dem Kolben 7 zur ersten Berstscheibe 8. Der beschleunigte Kolben 7 durchstößt mit seiner kinetischen Energie und der auf den Boden wirkenden axialen Gasschubkraft die Berstscheibe 8. Die Berstscheibe 8 wird so ausgelegt, daß sie nach dem Durchstoßen und unter Wirkung des Gasdrucks des Speichergases 10 sofort fast vollständig zerstört wird und daß so eine größere Öffnungsfläche als der Kolbenaußendurchmesser entsteht, so daß das Speichergas 10, trotz des in den Speicherbehälter eingedrungenen Kolbens, durch die Bohrungen 21 ausströmen kann.

Die zweite Berstscheibe 12 wird mit der umlaufenden Kerbe 6 und dem Gasdruckanstieg in der Kartusche 3 so abgestimmt, daß der erforderliche Berstdruck der zweiten Berstscheibe 12 höher liegt als der Gasdruck in der Kartusche 3, der zum Abreißen der umlaufenden Kerbe 6 führt. Das Bersten und das Ausströmen des heißen Umsetzungsgases durch die Durchgangsbohrung bzw. den Hohlraum 14 im Kolben 7 erfolgt bei ansteigendem Gasdruck in der Kartusche 3 erst nach dem Abreißen der umlaufenden Kerbe 6 (Trennen des Hülsenbodens) und nach dem Durchstoßen der Öffnungsmembran 8 beim Erreichen der Endstellung des Kolbens 7 (Fig. 4). Erst nach dem Bersten der Berstscheibe 12 beginnt der Gasdruck im Brennraum der Kartusche 3 zu sinken. Das heiße Umsetzungsgas mischt sich danach mit dem restlichen noch im Speichergasbehälter 9 befindlichen Speichergas 10 und strömt gemeinsam mit dem Speichergas 10 durch die Bohrungen 21 aus.

Der Schiebekolben 7 besitzt eine konische Strecke 18 (siehe Fig. 5 + 6). In der Endstellung (Fig. 4) wird der Kolben 7 aufgrund eines radialen Übermaßes des konischen Teils 18 in die zylindrische Kolbenführung 17 eingepreßt. Es entsteht eine Preßpassung. Die konische Strecke 18 erfüllt somit vorteilhaft zwei Aufgaben: Der Kolben 7 wird bei Erreichen der Endstellung sanft abgebremst (d. h. der Aufprall wird gedämpft) und aufgrund der starken Selbsthemmung auch bei einem eventuell erhöhten Gasdruck im Bereich des Druckbehälterhalses und bei einem zugleich abgeklungenen Gasdruck in der Kartusche 3 nicht zurück geschoben. Diese definierte Endstellung begünstigt eine gute Mischung des Umsetzungsgases mit dem Speichergas und mindert eine Streuung des Ausströmvorgangs.

## Patentansprüche

1. Hybridgasgenerator für einen Airbag (1) mit einer in einer Brennkammer angeordneten anzündbaren gaserzeugenden Feststoffladung (5), einer ein Gas (10) enthaltenden und mit einer ersten Berstscheibe (8) verschlossenen Speicherkammer (9), einer die Brennkammer begrenzenden, abreißbaren Trennwand (13), die mit einem hohlen Schiebekolben (7) zum Durchbohren der ersten Berstscheibe (8) verbunden ist und einer zweiten Berstscheibe (12) in der Trennwand (13) zwischen der Brennkammer und dem Hohlraum (14) des Schiebekolbens (7), **dadurch gekennzeichnet,**
- **daß** die Feststoffladung (5) in einer separat einbaubaren pyrotechnischen Kartusche (3) angeordnet ist,
- **daß** die Trennwand (13) die stirnseitige Begrenzung der Kartusche (3) bildet,
- **daß** an der Umfangswand der Kartusche (3) eine umlaufende Kerbe (6) als Sollbruchstelle für das Abreißen der Trennwand (13) angeordnet ist und
- **daß** die zweite Berstscheibe (12) eine Abplattung in der Trennwand (13) ist.

2. Hybridgasgenerator nach Anspruch 1, **dadurch gekennzeichnet, daß** die Umfangswand der Kartusche (3) die Trennwand (13) als axial verlängerten Haltebund (15) überragt und der Schiebekolben (7) mit seinem zur Trennwand (13) gewandten Ende zwischen der Trennwand (13) und dem Haltebund (15) eingebettet ist.

3. Hybridgasgenerator nach Anspruch 2, **dadurch gekennzeichnet, daß** der Schiebekolben (7) an seinem zur Trennwand (13) gewandten Ende eine umlaufende Nut (16) aufweist, in die der Haltebund (15) eingedrückt oder eingerollt wird.

4. Hybridgasgenerator nach Anspruch 2, **dadurch gekennzeichnet, daß** der Schiebekolben (7) mit der Trennwand (13) durch Bördeln des Haltebundes (15) um das zur Trennwand (13) gewandte Ende des Schiebekolbens (7) verbunden ist.

5. Hybridgasgenerator nach einem der Ansprüche 1 bis 4, wobei der Schiebekolben (7) in einer Kolbenführung (17) verschiebbar gelagert ist, **dadurch gekennzeichnet, daß** der Schiebekolben (7) an seinem zur Trennwand (13) gewandten Ende konisch (18) ausgebildet ist mit einem gegenüber dem Durchmesser der Kolbenführung (17) radialen Übermaß.

## Claims

1. Hybrid gas generator for an air-bag (1), having an ignitable gas-generating solids charge (5) arranged in a combustion chamber, a storage chamber (9) which contains a gas (10) and is closed with a *first* bursting disc (8), a dividing wall (13) which can be torn away and which delimits the combustion chamber and which is connected to a hollow sliding piston (7) for piercing the first bursting disc (8), and a second bursting disc (12) in the dividing wall (13) between the combustion chamber and the cavity (14) of the sliding piston (7), **characterised**
- **in that** the solids charge (5) is arranged in a pyrotechnic cartridge (3) which can be installed separately,
- **in that** the dividing wall (13) forms the lateral boundary of the cartridge (3),
- **in that** a peripheral notch (6) is arranged on the surrounding wall of the cartridge (3) as a predetermined breaking point for the tearing away of the dividing wall (13), and
- **in that** the second bursting disc (12) forms a flattening in the dividing wall (13).

2. Hybrid gas generator according to claim 1, **characterised in that** the surrounding wall of the cartridge (3) overlaps the dividing wall (13) as an axially extended holding collar (15) and the end of the sliding piston (7) that faces the dividing wall (13) is embedded between the dividing wall (13) and the holding collar (15).

3. Hybrid gas generator according to claim 2, **characterised in that** the sliding piston (7) has, at its end which faces the dividing wall (13), a peripheral groove (16), into which the holding collar (15) is pressed or rolled.

4. Hybrid gas generator according to claim 2, **characterised in that** the sliding piston (7) is connected to the dividing wall (13) by flanging of the holding collar (15) around the end of the sliding piston (7) that faces the dividing wall (13).

5. Hybrid gas generator according to one of claims 1 to 4, wherein the sliding piston (7) is displaceably mounted in a piston guide (17), **characterised in that** the end of the sliding piston (7) that faces the dividing wall (13) is constructed conically (18) with a radial overdimension with respect to the diameter of the piston guide (17).

## Revendications

1. Générateur de gaz hybride pour un airbag (1), comportant une charge solide (5) inflammable de génération gaz disposée dans une chambre de combustion, une chambre d'accumulation (9) contenant un gaz (10) et fermée par un premier disque de rupture (8), une cloison (13) déchirable qui délimite la chambre de combustion et est liée à un piston coulissant (7), évidé, pour percer le premier disque de rupture (8) et un deuxième disque de rupture (12) disposé dans la cloison (13) entre la chambre de combustion et la cavité (14) du piston coulissant (14), **caractérisé en ce**
- **que** la charge solide (5) est disposée dans une cartouche (3) pyrotechnique pouvant être mise en place séparément,
- **que** la cloison (13) constitue la paroi frontale de la cartouche (3),
- **qu'**une entaille (6) circulaire est aménagée dans la paroi extérieure de la cartouche (3) en tant que point destiné à la rupture pour la déchirure de la cloison (13) et
- **que** le deuxième disque de rupture (12) est une zone aplatie dans la cloison (13).

2. Générateur de gaz hybride selon la revendication 1, **caractérisé en ce que** la paroi périphérique de la cartouche (3) s'étend au delà de la cloison (13) en tant que collet de fixation prolongé dans la direction axiale et que le piston coulissant (7), avec son extrémité tournée vers la cloison (13) est monté entre la cloison (13) et le collet de fixation (15).

3. Générateur de gaz hybride selon la revendication 2, **caractérisé en ce que** le piston coulissant (7), à son extrémité tournée vers la cloison (13), présente une gorge circulaire (16) dans laquelle le collet de fixation (15) est repoussé ou roulé.

4. Générateur de gaz hybride selon la revendication 2, **caractérisé en ce que** le piston coulissant (7) est lié à la cloison (13) par sertissage du collet de fixation (15) autour de l'extrémité du piston coulissant (7) tournée vers la cloison (13).

5. Générateur de gaz hybride selon une des revendications 1 à 4, dans lequel le piston coulissant (7) est monté coulissant dans un guide de piston (17), **caractérisé en ce que** le piston coulissant (7), à son extrémité tournée vers la cloison (13), est conique (18) avec un surdimensionnement radial par rapport au diamètre du guide de piston (17).
